# FASCICULE DE BREVET EUROPEEN

(11) **EP 3 113 980 B1**
(45) Date de publication et mention de la délivrance du brevet: **25.04.2018**
(21) Numéro de dépôt: 14827793.2
(22) Date de dépôt: 18.12.2014
(51) Int. Cl.: B60R 1/00

(54) **DISPOSITIF ET PROCÉDÉ DE RÉTRO-VISION À AFFICHAGE ÉLECTRONIQUE POUR VÉHICULE**
VORRICHTUNG UND VERFAHREN FÜR RÜCKBLICK MIT ELEKTRONISCHER ANZEIGE FÜR EIN FAHRZEUG
DEVICE AND METHOD FOR REAR-VIEW VISION WITH ELECTRONIC DISPLAY FOR A VEHICLE

(30) Priorité: 30.12.2013 FR 1363692
(43) Date de publication de la demande: 11.01.2017
(73) Titulaire: Valeo Systemes Thermiques, 78320 Le Mesnil Saint Denis (FR)
(72) Inventeur: AUTRAN Frédéric, 78320 Le Mensil Saint Denis (FR)
(74) Mandataire: Delplanque, Arnaud
(86) Numéro de dépôt international: PCT/FR2014/000291
(87) Numéro de publication internationale: WO 2015/101724

(56) Documents cités:
- WO-A1-2013/022577
- WO-A1-2013/144998
- WO-A2-96/38319
- DE-A1-102008 059 269

## Description

L'invention concerne un dispositif et un procédé de rétro-vision à affichage électronique pour véhicule, le procédé étant mis en oeuvre par ce dispositif. Dans le domaine automobile, la rétro-vision est traditionnellement assurée par un rétroviseur central et un couple de rétroviseurs latéraux. Cependant, il est connu de remplacer ces éléments par un dispositif muni de moyens électroniques associant des caméras et des écrans.

Ainsi, ce dispositif permet, par exemple, d'éviter d'avoir le rétroviseur central occulté par des passagers ou des bagages occupant l'habitacle du véhicule, ou encore de supprimer la lunette arrière pour certains véhicules car cette lunette arrière est coûteuse. De plus, sa conception ainsi que son design sont contraignants. Cela priverait donc d'efficacité le rétroviseur central.

D'autre part, les rétroviseurs latéraux impliquent un accroissement non négligeable de la largeur du véhicule et ont un fort impact aérodynamique et acoustique sur la conception et le design de l'ensemble du véhicule. Dès lors, il a déjà été envisagé de remplacer les traditionnels rétroviseurs à miroir par des systèmes de rétro-vision assistés par des caméras de faible encombrement associées à des écrans disposés à l'intérieur de l'habitacle du véhicule. En outre, ces systèmes permettent de supprimer les angles morts que l'on a d'habitude avec des rétroviseurs à miroirs.

Cependant, les écrans présentent un certain nombre d'inconvénients concernant l'affichage des images fournies par les caméras. En effet, la taille de l'écran est limitée par la place disponible dans la voiture et par son coût, ce qui amène les constructeurs automobiles à devoir utiliser des écrans relativement petits, typiquement de moins de 10 cm de largeur. D'autre part, la position de l'afficheur dans l'habitacle est contrainte par la place disponible et les règlements de sécurité en cas d'accident. Cela a pour conséquence de limiter le champ de vision fourni par le système de rétro-vision.

Il est possible d'utiliser une camera extérieure avec un champ de vision plus grand et présenter l'ensemble sur l'écran. Mais dans ce cas l'image sur l'écran sera comprimée et les détails ne seront plus visibles.

L'invention a donc pour objectif de proposer un dispositif de rétro vision muni de moyens électroniques permettant au conducteur d'avoir une rétro-vision avec un champ de vision élargi.

Pour cela, l'invention propose un dispositif de rétro-vision selon la revendication 1. Ainsi, il suffit au conducteur de changer de position pour modifier la partie de l'image qui s'affiche et avoir différents angles de vue de rétro-vision, comme cela est le cas pour un rétroviseur usuel à miroir. Grâce à l'invention, le dispositif fonctionne avec des moyens électroniques qui permettent de se passer de rétroviseurs extérieurs qui augmentent la largeur du véhicule.

En outre, le dispositif permet d'utiliser des écrans plus petits et ainsi de les intégrer plus facilement dans le véhicule. Ces caractéristiques apportent aussi des avantages en termes de réduction des coûts et de poids du dispositif de rétro vision.

Selon différents modes de réalisation de l'invention, qui pourront être pris ensemble ou séparément :
- les moyens d'affichage comprennent au moins un écran apte à être embarqué à bord dudit véhicule ;
- ledit au moins un moyen de calcul est configuré pour déterminer la position de la tête du conducteur grâce aux distances fournies par les détecteurs ;
- ledit au moins un moyen de détection comprend un troisième détecteur permettant au dispositif de déterminer la hauteur de la tête du conducteur ;
- ledit dispositif comprend des moyens de réglage manuels pour sélectionner manuellement la partie de l'image ;
- ledit dispositif comprend des moyens d'adaptation de la sélection de l'image pour une marche arrière ;
- ledit dispositif comprend des moyens de capture d'images configurés pour capturer des images de rétro-vision, celles-ci étant fournies au dit au moins un moyen électronique ;
- lesdits moyens de capture d'images comportent au moins une caméra.

L'invention se rapporte également à un procédé de rétro-vision à affichage électronique pour véhicule apte à être conduit par un conducteur, le procédé étant mis en oeuvre par un dispositif munis d'au moins un moyen électronique, et comprenant les étapes suivantes consistant à :
- recevoir au moins une image de rétro-vision ;
- sélectionner une partie de l'image en fonction de la position du conducteur, et
- fournir un signal représentatif de ladite partie d'image sélectionnée, apte à être affiché sur un écran.

L'invention sera mieux comprise à la lumière de la description suivante qui n'est donnée qu'à titre indicatif et qui n'a pas pour but de la limiter, accompagnée des dessins joints :
la figure 1 est une représentation schématique d'un premier mode de réalisation d'un dispositif de rétro vision selon l'invention,
la figure 2 est une représentation schématique d'un deuxième mode de réalisation d'un dispositif de rétro vision selon l'invention,
la figure 3 est une représentation schématique d'un troisième mode de réalisation d'un dispositif de rétro vision selon l'invention.

Dans la description suivante, nous utilisons les termes gauche et droit pour différencier des éléments dans un véhicule. Cependant ces termes n'ont aucun caractère limitatif et ne servent qu'à simplifier la compréhension de la description.

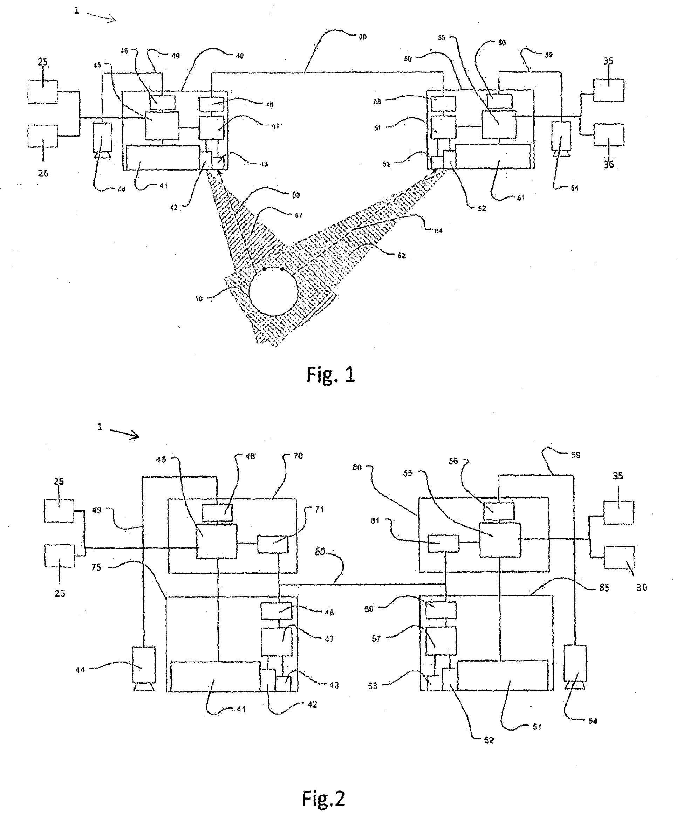

Sur les figures 1 à 3, est représenté un dispositif 1 de rétro-vision pour véhicule apte à être conduit par un conducteur. Le dispositif 1 de rétro-vision comprend au moins un moyen électronique, et sur les figures une pluralité de moyens électroniques 40, 50, 70, 75, 80, 85, configuré(s) pour recevoir au moins une image de rétro-vision et permettre l'affichage d'une partie de ladite image, la partie de l'image affichée étant sélectionnée en fonction de la position du conducteur.

Pour cela lesdits moyens électroniques 40, 50, 70, 75, 80, 85 comprennent au moins un moyen de capture d'image, et sur les figures deux moyens de capture d'images 44, 54, configuré(s) pour capturer des images de rétro-vision. Lesdits moyens de capture d'images sont par exemple deux caméras 44, 54 disposées, chacune, sensiblement sur des positions usuelles de rétroviseurs à miroir sur un véhicule (non représenté sur les figures), avec par exemple une caméra gauche 44 et une caméra droite 54.

Pour l'affichage, lesdits moyens électroniques 40, 50, 70, 75, 80, 85 comprennent des moyens d'affichage 41, 51, par exemple deux écrans, un écran gauche 41 et écran droit 51, qui sont aptes à être embarqués à bord du véhicule. Chaque écran 41, 51 est relié à une caméra 44, 54 pour afficher une partie de l'image capturée par celle-ci. Les écrans sont disposés de manière à être visibles par le conducteur.

Dans une variante non représentée, le dispositif 1 peut ne comporter qu'un seul capteur d'image de rétro-vision, destiné à fournir une image du type de celle qui se forme dans un rétroviseur intérieur à miroir. Dans ce cas, le dispositif ne comporte qu'un seul écran.

Lesdits moyens électroniques 40, 50, 70, 75, 80, 85 sont aussi pourvus de moyens de calcul 45, 47, 55, 57 configurés pour sélectionner la partie d'image en fonction de la position du conducteur. Les moyens de calcul 45, 47, 55, 57 comportent un générateur d'image 45, 55 pour chaque écran 41, 51 et des unités de calcul 47, 57 de la position du conducteur. Le générateur d'image 45, 55 est une unité de traitement d'image qui transmet la partie de l'image à afficher dans un codage électronique adapté à l'affichage sur un des écrans 41, 51. Les images capturées par les caméras 41, 51 sont transmises par des liaisons vidéo 49, 59 à des récepteurs vidéo 46, 56, puis au générateur d'image 45, 55 qui sélectionne la partie d'image à afficher.

Afin d'estimer la position de la tête 10 du conducteur, dans la variante illustrée sur les figures, lesdits moyens électroniques 40, 50, 70, 75, 80, 85 sont munis de moyens de détection 42, 52, 43, 53. Ici, lesdits moyens de détection 42, 52, 43, 53 sont deux détecteurs configurés, chacun, pour calculer une distance qui sépare le détecteur de la tête 10 du conducteur. Un détecteur est muni, par exemple, d'un émetteur 42, 52 et d'un récepteur 43, 53 infrarouges. L'émetteur 42, 52 envoie un faisceau 61, 62 infrarouge en direction du conducteur, dont une partie 63, 64 est réfléchie par la tête 10 du conducteur vers le récepteur 43, 53. Les parties réfléchies 63 et 64 permettent de calculer la position de la tête 10 du conducteur.

Dans une variante non représentée, le détecteur peut être unique, constitué par exemple d'une caméra et d'un logiciel de reconnaissance de la position de la tête du conducteur, qui peut être utilisée par ailleurs pour surveiller les risques d'endormissement du conducteur.

Dans le cas de deux détecteurs comme illustré, les deux distances mesurées sont transmises aux unités de calcul 47, 57 pour que ces dernières estiment la position de la tête 10 du conducteur par une méthode de type « triangulation ». La position est calculée dans un premier plan, par exemple dans un plan horizontal par rapport au véhicule. L'unité de calcul gauche 47 et l'unité de calcul droite 57 estiment la position du conducteur, notamment sa tête 10, à partir des mesures fournies par les détecteurs. Les unités de calcul 47, 57 communiquent ensemble au moyen d'un transmetteur gauche 48, ou de deux transmetteurs gauche 48, 71 comme détaillé plus loin, et un ou deux transmetteurs droits 58, 81 et d'une liaison de communication 60 afin de s'envoyer mutuellement des données qui permettent le calcul de la position de la tête 10 du conducteur.

Une fois la position de la tête du conducteur calculée, la position est fournie aux générateurs d'image 45, 55 qui sélectionnent la partie d'image. La sélection est définie en fonction de paramètres liés à la configuration de la voiture et de l'emplacement du conducteur. Lorsque le conducteur regarde un des écrans 41, 51, l'effet obtenu est le même que celui d'un rétroviseur usuel, pour lequel, si le conducteur change la position de sa tête 10, il modifie son angle de vue en rétro-vision.

D'autres types de détecteurs peuvent être utilisés, tels que des détecteurs à ultrason, capacitifs, magnétiques, à radar, ou à mesures du temps de parcours de la lumière par exemple.

Afin d'avoir un dispositif plus compact, les détecteurs sont avantageusement disposés chacun sensiblement au niveau de chaque écran 41, 51, par exemple dans un même boîtier.

Le principe de la détection est le suivant : lorsque le signal de gauche augmente, c'est-à-dire que le conducteur se rapproche de l'écran gauche 41, et que dans le même temps le signal de droite diminue, c'est-à-dire que le conducteur s'éloigne de l'écran droit 51, cela signifie que le conducteur déplace sa tête 10 ou son buste vers la gauche.

Dans un mode de réalisation préféré, les moyens de détection comprennent un troisième détecteur (non représenté), disposé dans l'habitacle par exemple à l'endroit habituel d'un rétroviseur central. Le troisième détecteur mesure une troisième distance entre la tête du conducteur et le détecteur, et permet ainsi aux moyens de calcul 45, 47, 55, 57 de déterminer la position de la tête du conducteur dans un second plan, par exemple un plan vertical par rapport au véhicule, le troisième détecteur étant également relié aux moyens de calcul 45, 47, 55, 57.

Avantageusement, des moyens de réglage manuels 25, 35 peuvent être ajoutés au dispositif 1 afin de pouvoir sélectionner manuellement la partie de l'image à afficher sur le ou les écrans 41, 51. Ainsi, le conducteur peut ajuster la partie de l'image à l'angle de vue qu'il souhaite. Lorsque le conducteur active les moyens de réglage 25, 35 manuels, l'image affichée est par exemple figée pour qu'il puisse utiliser cette fonction aisément.

Selon une autre variante de réalisation, le dispositif 1 comprend des moyens d'adaptation 26, 36 de la sélection de l'image pour une marche arrière. En effet, pour une marche arrière, le conducteur a besoin d'un angle de vue particulier. Ainsi, le conducteur n'a pas besoin de se retourner pour effectuer la marche arrière. En outre, avantageusement, des moyens de détection agencés sur la boîte de vitesse peuvent servir à modifier automatiquement l'angle de vue affichée sur les écrans 41, 51 dès que la marche arrière est enclenchée, pour l'adapter à cette situation. Les moyens de réglage 26, 36 sont avantageusement configurés pour sélectionner manuellement la partie de l'image à afficher sur le ou les écrans 41, 51 dans le cas d'une marche arrière.

Les figures 1 à 3 représentent chacune un dispositif 1 de rétro-vision conforme à l'invention, muni des éléments mentionnés précédemment, qui sont regroupés dans des configurations différentes.

Dans une première configuration représentée sur la figure 1, le dispositif 1 a deux ensembles 40, 50, par exemple un boîtier gauche et un boîtier droit. Chaque ensemble 40, 50 regroupe l'écran 41, 51, l'émetteur 42, 52, le récepteur 43, 53, l'unité de calcul 47, 57, le générateur d'image 45, 55, le récepteur vidéo 46, 56 et le transmetteur 48, 58. D'une part, les deux ensembles 40, 50 sont reliés respectivement à une des caméras 44, 54 par les liaisons vidéos gauche 49 et droite 59, et d'autre part, ils sont reliés ensemble par le lien de communication 60 entre les transmetteurs gauche 48 et droit 58. Ici, hormis les caméras, les autres éléments forment une unité. Le dispositif 1 est donc disposé dans l'habitacle du véhicule à seulement deux endroits différents.

Dans une deuxième configuration représentée sur la figure 2, chaque ensemble est divisé en deux sous-ensembles 70, 75, 80, 85. Un premier sous-ensemble 75, 85 d'affichage et de détection regroupe l'écran 41, 51, l'émetteur 42, 52, le récepteur 43, 53 l'unité de calcul 47, 57 et le transmetteur 48, 58. Un second sous-ensemble 70, 80 de calcul d'image regroupe le générateur d'image 45, 55, le récepteur vidéo 46, 56 et un deuxième transmetteur vidéo 71, 81. Les deuxièmes transmetteurs vidéos 71, 81 ont pour fonction d'échanger les données entre l'unité de calcul 47, 57 et le générateur d'image 45, 55 de chaque ensemble. Les premiers sous ensembles 75, 85 sont reliés par la liaison de communication 60 entre les transmetteurs gauche 48 et droit 58 afin de permettre l'échange de données entre les unités de calcul 47, 57. Le générateur d'image 45, 55 du second sous-ensemble 70, 80 est relié à l'écran 41, 51 du premier sous-ensemble 75, 85. Ainsi, les premiers 75, 85 et deuxièmes 70, 80 sous-ensembles peuvent être disposés à des endroits différents dans le véhicule, les écrans 41, 51 des premiers sous ensembles 75, 85 devant être visibles par le conducteur.

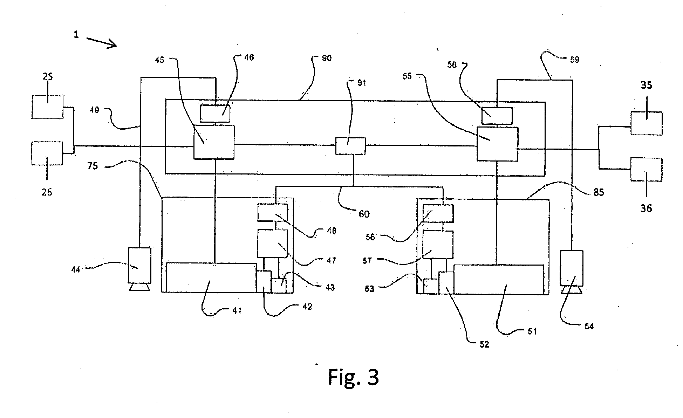

Dans une troisième configuration représentée sur la figure 3, le dispositif 1 comprend les mêmes premiers sous ensembles 75, 85 d'affichage et de détection que dans la deuxième configuration, et un sous ensemble commun 90 de calcul d'image regroupant les générateurs d'image 45, 55, les récepteurs vidéo 46, 56 et un transmetteur vidéo central 91. Le sous ensemble commun 90 est connecté aux premiers sous-ensemble 75, 85, d'une part entre le transmetteur vidéo central 91 et les deux transmetteurs droit 58 et gauche 48 par la liaison 60, et d'autre part, entre chaque générateur d'image 45, 55 et les écrans 41, 51. Les premiers sous ensembles 75, 85 sont reliés par la liaison de communication 60 entre les transmetteurs gauche 48 et droit 58 afin de permettre l'échange de données entre les unités de calcul 47, 57. Les caméras 44, 54 sont reliées au sous ensemble central 90 sur les récepteurs vidéos gauche 46 et droit 56. Ainsi, le sous ensemble commun 90 peut être agencé à un emplacement du véhicule et les premiers sous ensemble à des emplacements rendant les écrans 41, 51 visibles par le conducteur.

## Revendications

1. Dispositif de rétro-vision (1) pour véhicule apte à être conduit par un conducteur (10), le dispositif (1) comprenant au moins un moyen électronique (40, 50, 70, 75, 80, 85, 90) configuré pour recevoir au moins une image de rétro-vision et permettre l'affichage d'une partie de ladite image, la partie de l'image affichée étant sélectionnée en fonction de la position du conducteur (10), ledit au moins un moyen électronique (40, 50, 70, 75, 80, 85, 90) comprenant des moyens de calcul (45, 47, 55, 57) configurés pour sélectionner ladite partie de l'image et pour permettre l'affichage de ladite partie, des moyens d'affichage (41, 51) commandés par les moyens de calcul (45, 47, 55, 57), et au moins un moyen de détection (42, 43, 52, 53) de la position du conducteur (10), relié aux moyens de calcul (45, 47, 55, 57) **caractérisé en ce que** ledit au moins un moyen de détection comprend au moins deux détecteurs (42, 43, 52, 53) configurés, chacun, pour calculer une distance qui sépare le détecteur (42, 43, 52, 53) du conducteur (10), notamment la tête (10) du conducteur, et pour transmettre ces distances au dit au moins un moyen de calcul (45, 47, 55, 57) et **en ce que** ledit au moins un moyen d'affichage (41, 51) comprend deux écrans (41, 51), et les détecteurs sont disposés chacun sensiblement au niveau de chaque écran (41, 51).

2. Dispositif selon la revendication 1, dans lequel les moyens d'affichage (41, 51) comprennent au moins un écran (41, 51) apte à être embarqué à bord dudit véhicule.

3. Dispositif selon la revendication 1 dans lequel ledit au moins un moyen de calcul (45, 47, 55, 57) est configuré pour déterminer la position de la tête (10) du conducteur grâce aux distances fournies par les détecteurs (42, 43, 52, 53).

4. Dispositif selon la revendication 1, dans lequel ledit au moins un moyen de détection (42, 43, 52, 53) comprend un troisième détecteur permettant au dispositif (1) de déterminer la hauteur de la tête (10) du conducteur.

5. Dispositif selon l'une quelconque des revendications précédentes, comprenant des moyens de réglage (25, 35) manuels pour sélectionner manuellement la partie de l'image.

6. Dispositif selon l'une quelconque des revendications précédentes, comprenant des moyens d'adaptation (26, 36) de la sélection de l'image pour une marche arrière.

7. Dispositif selon l'une des revendications précédentes, comportant des moyens de capture d'images (44, 54) configurés pour capturer des images de rétro-vision, celles-ci étant fournies au dit au moins un moyen électronique (40, 50, 70, 75, 80, 85, 90).

8. Dispositif selon la revendication 7, dans lequel lesdits moyens de capture d'images (44, 54) comportent au moins une caméra (44, 54).

9. Procédé de rétro-vision pour véhicule apte à être conduit par un conducteur (10), le procédé étant mis en oeuvre par le dispositif de retro-vision (1) selon la revendication 1, **caractérisé en ce qu'**il comprend les étapes successives suivantes consistant à :
- recevoir au moins une image de rétro-vision.
- sélectionner une partie de l'image en fonction de la position du conducteur, et
- fournir un signal représentatif de ladite partie d'image sélectionnée, apte à être affiché sur un écran.

10. Procédé de rétro-vision selon la revendication 9, **caractérisé en ce qu'**il comprend en outre une étape consistant à afficher ladite partie d'image sélectionnée.

## Patentansprüche

1. Rückblickvorrichtung (1) für zum Fahren durch einen Fahrer (10) ausgebildete Fahrzeuge, wobei die Vorrichtung (1) wenigstens ein zum Empfangen von wenigstens einem Rückblickbild und Ermöglichen der Anzeige eines Teils des Bilds ausgebildetes elektronisches Mittel (40, 50, 70, 75, 80, 85, 90) umfasst, wobei der angezeigte Teil des Bilds entsprechend der Position des Fahrers (10) ausgewählt wird, wobei das wenigstens eine elektronische Mittel (40, 50, 70, 75, 80, 85, 90) zum Auswählen des Teils des Bilds und zum Ermöglichen der Anzeige des Teils ausgebildete Berechnungsmittel (45, 47, 55, 57), von den Berechnungsmitteln (45, 47, 55, 57) gesteuerte Anzeigemittel (41, 51) und wenigstens ein mit den Berechnungsmitteln (45, 47, 55, 57) verbundenes Erfassungsmittel (42, 43, 52, 53) der Position des Fahrers (10) umfasst, **dadurch gekennzeichnet, dass** das wenigstens eine Erfassungsmittel wenigstens zwei jeweils zum Berechnen eines Abstands, der den Sensor (42, 43, 52, 53) vom Fahrer (10), insbesondere vom Kopf (10) des Fahrers, trennt und zum Senden dieser Abstände an das wenigstens eine Berechnungsmittel (45, 47, 55, 57) ausgebildete Sensoren (42, 43, 52, 53) umfasst und dass das wenigstens eine Anzeigemittel (41, 51) zwei Bildschirme (41, 51) umfasst, und die Sensoren jeweils im Wesentlichen auf der Höhe von jedem Bildschirm (41, 51) angeordnet sind.

2. Vorrichtung nach Anspruch 1, wobei die Anzeigemittel (41, 51) wenigstens einen Bildschirm (41, 51) umfassen, der ausgebildet ist, an Bord des Fahrzeugs untergebracht zu werden.

3. Vorrichtung nach Anspruch 1, wobei das wenigstens eine Berechnungsmittel (45, 47, 55, 57) zum Ermitteln der Position des Kopfs (10) des Fahrers anhand der von den Sensoren (42, 43, 52, 53) gemeldeten Abstände ausgebildet ist.

4. Vorrichtung nach Anspruch 1, wobei das wenigstens eine Erfassungsmittel (42, 43, 52, 53) einen dritten Sensor umfasst, der der Vorrichtung (1) das Ermitteln der Höhe des Kopfs (10) des Fahrers ermöglicht.

5. Vorrichtung nach einem der vorhergehenden Ansprüche, umfassend manuelle Regelmittel (25, 35) zum manuellen Auswählen des Teils des Bilds.

6. Vorrichtung nach einem der vorhergehenden Ansprüche, umfassend Mittel zum Anpassen (26, 36) der Auswahl des Bilds für einen Rückwärtsgang.

7. Vorrichtung nach einem der vorhergehenden Ansprüche, umfassend zum Erfassen von Rückblickbildern, wobei diese an wenigstens ein elektronisches Mittel (40, 50, 70, 75, 80, 85, 90) geliefert werden, ausgebildete Bilderfassungsmittel (44, 54).

8. Vorrichtung nach Anspruch 7, wobei die Bilderfassungsmittel (44, 54) wenigstens eine Kamera (44, 54) umfassen.

9. Rückblickverfahren für zum Fahren durch einen Fahrer (10) ausgebildete Fahrzeuge, wobei das Verfahren von der Rückblickvorrichtung (1) nach Anspruch 1 durchgeführt wird, **dadurch gekennzeichnet, dass** es die folgenden Schritte in Reihe umfasst, bestehend aus:
- dem Empfangen von wenigstens einem Rückblickbild,
- dem Auswählen eines Teils des Bilds entsprechend der Position des Fahrers, und
- dem Liefern eines für den zum Anzeigen auf einem Bildschirm ausgebildeten ausgewählten Bildteil repräsentativen Signals.

10. Rückblickverfahren nach Anspruch 9, **dadurch gekennzeichnet, dass** es ferner einen Schritt des Anzeigens des ausgewählten Bildteils umfasst.

## Claims

1. Rear-view vision device (1) for a vehicle that can be driven by a driver (10), the device (1) comprising at least one electronic means (40, 50, 70, 75, 80, 85) configured to receive at least one rear-view vision image and to allow the display of a part of said image, the part of the image displayed being selected on the basis of the position of the driver (10), said at least one electronic means (40, 50, 70, 75, 80, 85, 90) comprising calculation means (45, 47, 55, 57) configured to select said part of the image and to enable the display of said part, display means (41, 51) controlled by the calculation means (45, 47, 55, 57), and at least one means (42, 43, 52, 53) of detecting the position of the driver (10), connected to the calculation means (45, 47, 55, 57), **characterized in that** said at least one detection means comprises at least two detectors (42, 43, 52, 53), each configured to calculate a distance between the detector (42, 43, 52, 53) and the driver (10), notably the driver's head (10), and to transmit these distances to said at least one calculation means (45, 47, 55, 57), and **in that** said at least one display means (41, 51) comprises two screens (41, 51), and each of the detectors is placed substantially at the position of each screen (41, 51).

2. Device according to Claim 1, wherein the display means (41, 51) comprise at least one screen (41, 51) adapted to be placed on board said vehicle.

3. Device according to Claim 1, wherein said at least one calculation means (45, 47, 55, 57) is configured to determine the position of the driver's head (10), using the distances supplied by the detectors (42, 43, 52, 53) .

4. Device according to Claim 1, wherein said at least one detection means (42, 43, 52, 53) comprises a third detector enabling the device (1) to determine the height of the driver's head (10).

5. Device according to any of the preceding claims, comprising manual adjustment means (25, 35) for manually selecting the part of the image.

6. Device according to any of the preceding claims, comprising means (26, 36) for adapting the image selection for reversing.

7. Device according to any of the preceding claims, comprising image capture means (44, 54) configured to capture rear-view vision images, these images being supplied to said at least one electronic means (40, 50, 70, 75, 80, 85, 90).

8. Device according to Claim 7, wherein said image capture means (44, 54) comprise at least one camera (44, 54).

9. Method for rear-view vision for a vehicle that can be driven by a driver (10), the method being used by the rear-view vision device (1) according to Claim 1, **characterized in that** it comprises the following steps, consisting of:
- receiving at least one rear-view vision image;
- selecting a part of the image on the basis of the driver's position; and
- supplying a signal representing said selected part of the image which can be displayed on a screen.

10. Rear-view vision method according to Claim 9, **characterized in that** it further comprises a step consisting in displaying said selected part of the image.
